# EUROPÄISCHE PATENTSCHRIFT

(11) **EP 0 911 557 B1**
(45) Veröffentlichungstag und Bekanntmachung des Hinweises auf die Patenterteilung: **14.04.2004**
(21) Anmeldenummer: 98118045.8
(22) Anmeldetag: 23.09.1998
(51) Int. Cl.: F16K 21/12

(54) **Servoventil, insbesondere Selbstschlussventil oder Druckspüler**
Servo valve, especially a self closing valve or a pressure flush valve
Servovalve, en particulier une soupape à fermeture automatique ou une soupape de chasse d'eau sous pression

(30) Priorität: 01.10.1997 DE 19743443
(43) Veröffentlichungstag der Anmeldung: 28.04.1999
(73) Patentinhaber: GROHEDAL Sanitärsysteme GmbH & Co.KG, D-32457 Porta Westfalica (DE)
(72) Erfinder: Blanke, Willfried, 32427 Minden (DE)
(74) Vertreter: Ziegler, Thomas, Dr.

(56) Entgegenhaltungen:
- EP-A- 0 373 037
- DE-A- 2 603 731
- US-A- 2 997 271
- US-A- 4 825 903

## Beschreibung

Die Erfindung betrifft ein Servoventil, insbesondere Selbstschlußventil, Druckspüler o. dgl., mit einem relativ zum Hauptventilsitz bewegbaren Hauptventilverschlußglied, das mit einem Endbereich in eine Offenund eine Schließstellung zum Hauptventilsitz bewegbar ist, einer den anderen Endbereich aufnehmenden Entlastungskammer, einem eine Ausgleichsdüse aufweisenden Ausgleichskanal zwischen dem Zuflußstutzen des Ventils und der Entlastungskammer und einer, entgegen einer Federkraft, in eine den Zutrittskanal der Ausgleichsdüse verringernde Lage bewegbaren Drosseleinrichtung, die auf den Differenzdruck zwischen der Entlastungskammer und dem stromaufwärts vor dem Hauptventil befindlichen Bereich anspricht.

Ein derartiges Servoventil in Form eines Druckspülers ist aus der deutschen Patentschrift DE 26 03 731 C2 bekannt. Bei dieser Einrichtung ist die Entlastungskammer über eine Ausgleichsdüse mit dem Einlaßstutzen verbunden. Die Ausgleichsdüse ist dabei mit einer Drosseleinrichtung versehen, die auf den Differenzdruck zwischen dem Einlaßstutzen und der Entlastungskammer anspricht und somit ein unerwünschtes beschleunigtes Schließen des Hauptventils in der Drosselphase mindert. In jüngerer Zeit werden jedoch zunehmend höhere Ansprüche an die Drosseleinrichtung für die Ausgleichsdüse gestellt, wobei insbesondere bei der vielfach angestrebten Verkleinerung der Servoventile es sich gezeigt hat, daß die bekannte Drosseleinrichtung diesen Ansprüchen nicht genügt.

Der Erfindung liegt die Aufgabe zugrunde, die Ausgleichsdüsenausbildung bei einem Servoventil zu verbessern.

Diese Aufgabe wird erfindungsgemäß dadurch gelöst, daß die Drosseleinrichtung gestuft unterschiedlich stark von der Federkraft gegen den Differenzdruck gestützt ist, derart, daß im ersten Drosselbereich bei geringem oder keinem Differenzdruck die Drosseleinrichtung von einem weichen Federbereich in dem größten öffnungsbereich gehalten ist, während bei großem Differenzdruck der weiche Federbereich an einen Anschlag gelangt und die weitere Drosselung von einem harten Federbereich bestimmt ist. Hiermit wird insbesondere erreicht, daß in der Ruhestellung des Servoventils die Drosseleinrichtung aus der Ausgleichsdüse herausgeführt wird, so daß evtl. eingetretene Verschmutzungen aus der Ausgleichsdüse heraustreten oder abgeschwemmt werden können.

In der Normalschließbetriebsstellung des Servoventils, welche etwa 80% des Hubs des Hauptventilverschlußglieds umfaßt, wird der weiche Federbereich, der etwa eine lineare Kennlinie aufweist, im wesentlichen bis zum Anschlag eingefedert, wodurch dann eine für den Normalbetrieb erforderliche Drosselung in der Ausgleichsdüse erfolgt. Bei einer zunehmenden Druckdifferenz, welche verstärkt in der Drossel- und Schließphase des Hauptventilverschlußglieds auftritt, erfolgt eine weitere Drosselung des Durchflusses durch die Ausgleichsdüse mit Hilfe des starken Federbereichs, welcher vorzugsweise eine progressiv gekrümmte Kennlinie aufweist, und ermöglicht eine druckstoßarme Ventilabsperrung.

Mit den erfindungsgemäßen Maßnahmen wird es ermöglicht, daß das Hauptventil auf etwa 37% zu der bekannten Bauweise im Durchmesser verringert werden konnte, wobei die entsprechend kleinen Durchströmungen pro Zeiteinheit durch die Ausgleichsdüse mit hoher Genauigkeit erreicht werden. Mit der Verkleinerung der Armatur kann eine erhebliche Kostenersparnis erzielt werden.

Weitere Ausgestaltungen der Erfindung sind in den Ansprüchen 2 bis 14 angegeben.

Ausführungsbeispiele der Erfindung sind in der Zeichnung dargestellt und werden im folgenden näher erläutert. Es zeigt
- Fig. 1: ein Servoventil in Form eines Druckspülers in schematischer Darstellung, wobei die vergrößert dargestellte Ausgleichsdüse mit der Drosseleinrichtung sich in Ruheposition befindet;
- Fig. 2: die in Fig. 1 gezeigte Ausgleichsdüse mit Drosseleinrichtung in der Normal-schließbetriebsstellung;
- Fig. 3: die in Fig. 1 gezeigte Ausgleichsdüse mit Drosseleinrichtung in der Position bei verstärktem Differenzdruck;
- Fig. 4: ein anderes Servoventil in Form eines Selbstschlußventils für ein Waschbecken o. dgl. teilweise geschnitten;
- Fig. 5: einen Teil des in Fig. 4 gezeigten Selbstschlußventils in vergrößerter Darstellung;
- Fig. 6: das in Fig. 4 gezeigte Hauptventilverschlußglied in vergrößerter Darstellung im Längsschnitt;
- Fig. 7: das in Fig. 6 gezeigte Hauptventilverschlußglied in der Schnittebene VII;
- Fig. 8: einen Teil des in Fig. 6 gezeigten Hauptventilverschlußglieds in Vorderansicht;
- Fig. 9: einen Teil des in Fig. 6 gezeigten Hauptventilverschlußglieds in Rückansicht;
- Fig. 10: einen Teil des in Fig. 6 gezeigten Hauptventilverschlußglieds um 90° gedreht und ohne Ringelement;
- Fig. 11: das in Fig. 7 gezeigte Ringelement in abgewickelter Form;
- Fig. 12: das in Fig. 11 gezeigte Ringelement um 90° gedreht.

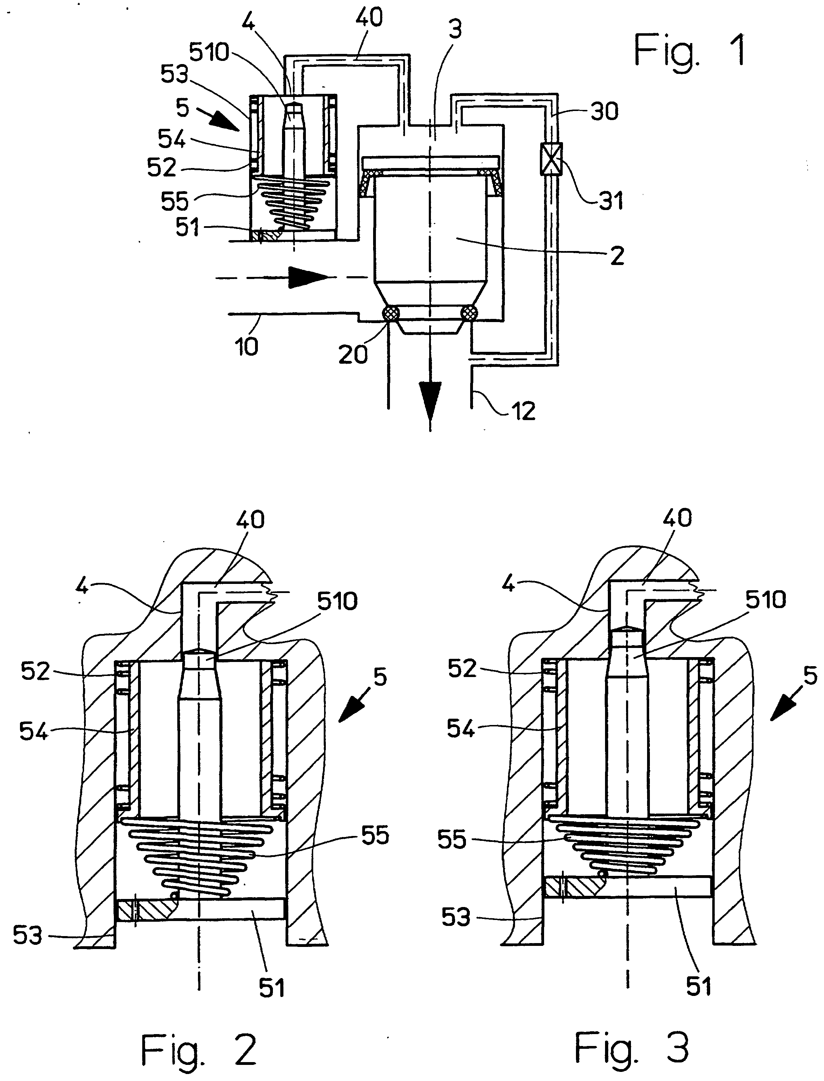

Der Einfachheit halber sind bei den Ausführungsbeispielen in der Zeichnung gleiche oder entsprechende Elemente mit jeweils gleichen Bezugszeichen versehen.
In der Zeichnung ist in Fig. 1 bis 3 eine Druckspülereinrichtung in schematischer Weise dargestellt, wie sie für die Toilettenspülung eingesetzt wird. In Fig. 1 ist der Druckspüler in Ruheposition dargestellt, wobei ein Hauptventilverschlußglied 2 sich in der Schließposition an einem Hauptventilsitz 20 befindet. Der Wasserdruck aus dem Versorgungsleitungsnetz wirkt hierbei auf einen Zuflußstutzen 10 ein und gelangt von einer Drosseleinrichtung 5 mit einer Ausgleichsdüse 4 über einen Ausgleichskanal 40 in eine Entlastungskammer 3 des Druckspülers. Der Wasserdruck wirkt von hier auf das Hauptventilverschlußglied 2 ein, wobei die Einwirkungsfläche in der Entlastungskammer 3 um den Querschnitt des Hauptventilsitzes 20 vergrößert ist, so daß das Hauptventilverschlußglied 2 in dieser Lage von dem Wasserdruck in Schließposition gehalten wird. Wird in dieser Schließposition ein in einer Entlastungsleitung 30 angeordnetes Entlastungsventil 31 von einem Benutzer betätigt, so wird die Entlastungskammer 3 von dem im Zuflußstutzen 10 anstehenden Wasserdruck entlastet, so daß nunmehr das Hauptventilverschlußglied 2 durch den im Zuflußstutzen 10 anstehenden Wasserdruck vom Hauptventilsitz 20 abgehoben und in die Entlastungskammer 3 eingeschoben wird. Hierbei wird der Wasserausfluß vom Zuflußstutzen 10 in ein Auslaufmundstück 12 für den Spülvorgang freigegeben.
Wird danach das Entlastungsventil 31 wieder abgesperrt, so baut sich in der Entlastungskammer 3 ein im Zuflußstutzen 10 herrschender Druck erneut wieder auf, wodurch das Hauptventilverschlußglied 2 wieder in Richtung auf den Hauptventilsitz 20 verschoben wird. Damit wird der Spülvorgang beendet.
Zur Steuerung der Schließbewegung des Hauptventilverschlußglieds 2 ist die Ausgleichsdüse 4 mit einer Drosseleinrichtung 5 versehen. Die Drosseleinrichtung 5 ist von einem verschiebbar in einem Führungszylinder 53 angeordneten Kolben 51 gebildet, der koaxial ein Drosselglied 510 trägt. Der Kolben 51 ist gegenüber dem Druck im Zuflußstutzen 10 von einer weichen Feder 52 und einer harten Feder 55 abgestützt. Die weiche Feder 52 ist als Schraubenfeder ausgebildet und stützt sich einerseits im Grund des Führungszylinders 53 und andererseits an einem Bund einer Hülse 54 ab. Die harte Feder 55 ist als Kegelfeder ausgebildet und stützt sich einerseits am Bund der Hülse 54 ab und andererseits an einer Stirnseite des Kolbens 51.
Die Drosseleinrichtung 5 hat folgende Funktionsweise: In Ruhestellung des Druckspülers befindet sich die Drosseleinrichtung 5 in der in Fig. 1 gezeigten Position. Das an dem Kolben 51 ausgebildete Drosselglied 510 ist von der weichen Feder 52 und der harten Feder 55 völlig aus der Ausgleichsdüse 5 entfernt, so daß Verschmutzungen etc. aus diesem Bereich ausgeschwemmt werden können. Sobald sich ein Differenzdruck zwischen der Entlastungskammer 3 und dem Zuflußstutzen 10 bildet, wird der Kolben 51 in der Zylinderführung 53 entgegen der Kraft der weichen Feder 52 bewegt, so daß das Drosselglied 510 in die Ausgleichsdüse 4 eingeschoben wird und den Durchfluß drosselt, wie es in Fig. 2 der Zeichnung dargestellt ist. In dieser Drosselstellung erfolgt zu etwa 80% der Schließhub des Hauptventilverschlußglieds 2, wobei im äußersten Falle die Hülse 54 im Grund der Zylinderführung 53 anliegt und einen Anschlag bildet. Im letzten, etwa 20% des Schließhubs umfassenden Bereich des Schließvorgangs, also in der Drosselund Schließphase des Hauptventilverschlußglieds 2, tritt, insbesondere verursacht durch das Verringern der Fließgeschwindigkeit des Wassers, eine plötzliche Druckerhöhung im Zuflußstutzen 10 auf und verursacht einen höheren Differenzdruck zur Entlastungskammer 3. Der höhere Differenzdruck verursacht, daß das Drosselglied 510 über die starke Feder 55 weiter in die Ausgleichsdüse 4 eindringt und eine noch stärkere Drosselung bewerkstelligt, wie es aus Fig. 3 der Zeichnung ersichtlich ist, so daß auch ein druckstoßarmes Absperren des Spülwassers mit im Querschnitt zu den bekannten Ausführungen auf ein Drittel verkleinerten Druckspülern erreicht wird.
In der Zeichnung ist die Ausgleichsdüse 4 mit der Drosseleinrichtung 5 parallel neben dem Hauptventilverschlußglied 2 in vergrößerter Darstellung vorgesehen. Selbstverständlich kann die Ausgleichsdüse mit der Drosseleinrichtung auch in der Seitenwandung des Hauptventilverschlußglieds 2 im Bereich des Zuflußstutzens 10 angeordnet werden.

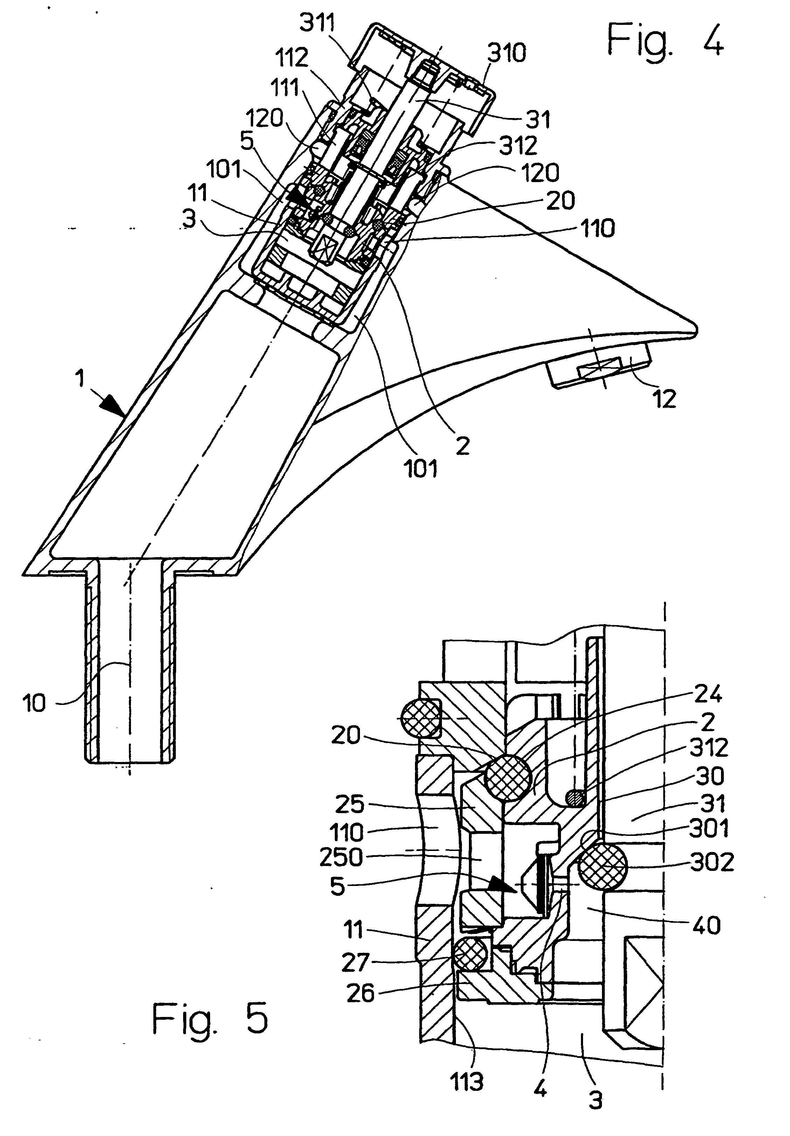

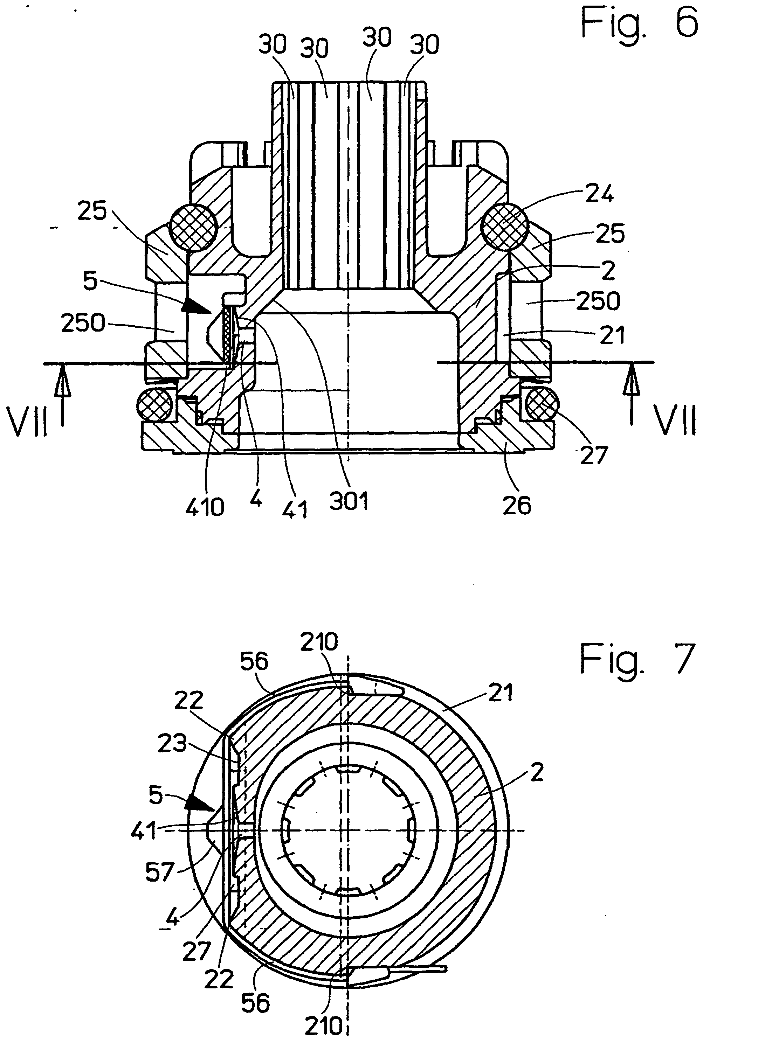

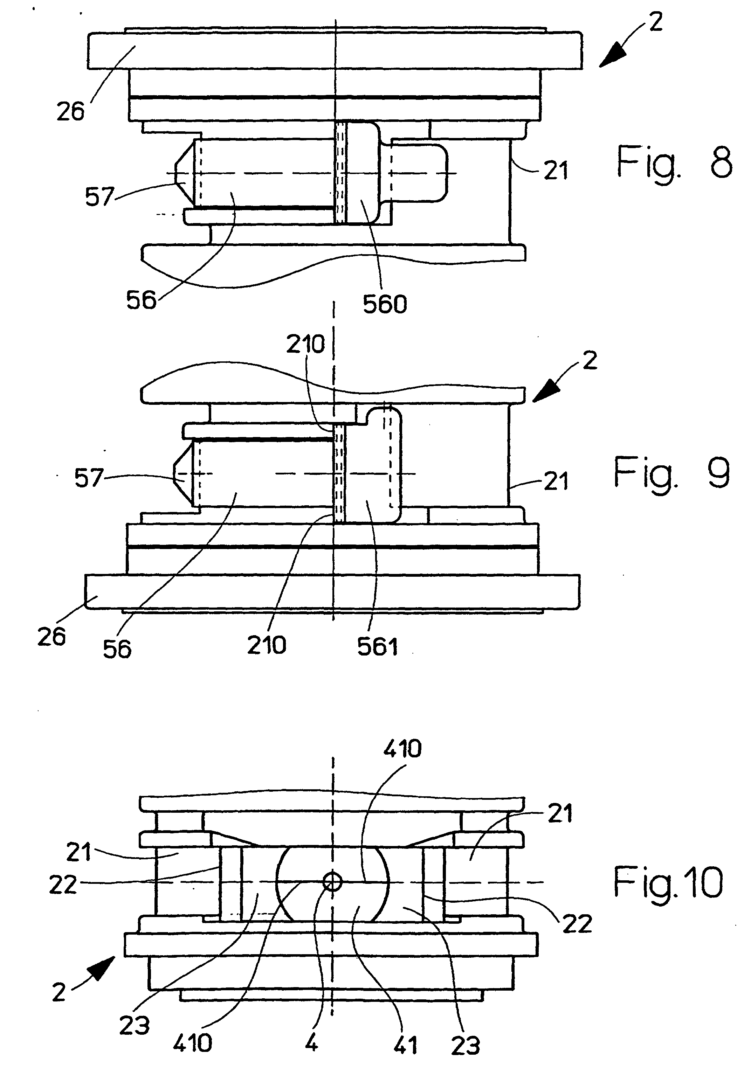

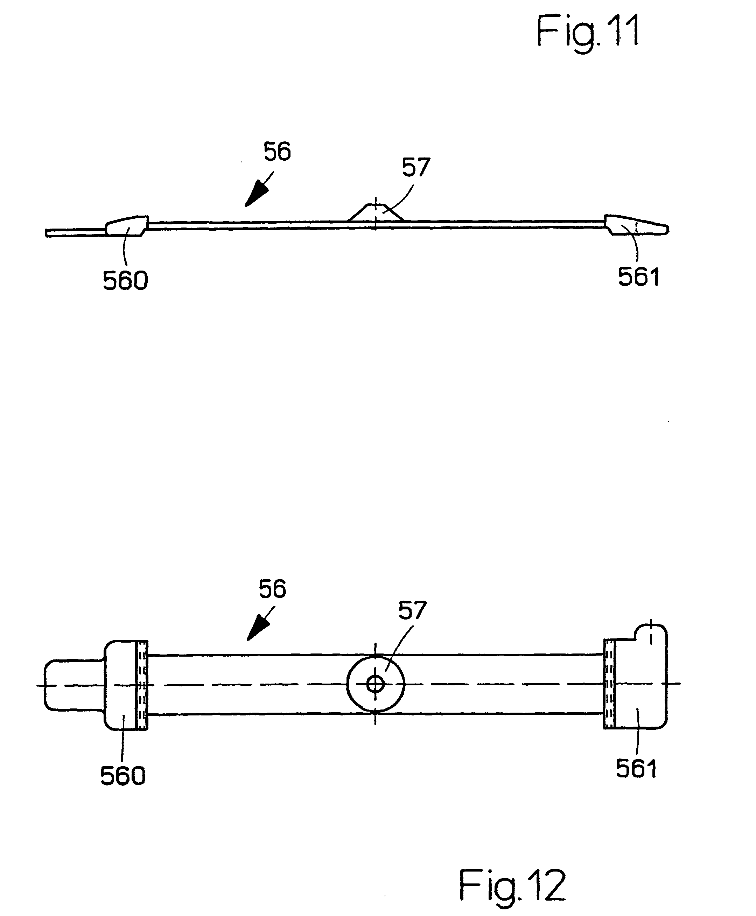

In Fig. 4 bis 12 ist ein anderes Ausführungsbeispiel eines Servoventils in Form eines Selbstschlußwasserzapfventils dargestellt.
In einem Armaturengehäuse 1 mit einem Zufluß- und Befestigungsstutzen 10 und einem Auslaufmundstück 12 ist eine Ventilkartusche 11, in dem das Selbstschlußventil angeordnet ist, vorgesehen, wie es insbesondere aus Fig. 4 zu entnehmen ist. Das Armaturengehäuse 1 wird mit dem Zufluß- und Befestigungsstutzen 10 z. B. an einem - in der Zeichnung nicht dargestellten - Waschtisch in bekannter Weise befestigt. An dem vorstehenden Endbereich des Zuflußstutzens 10 wird die Versorgungsleitung von Kalt-, Warm- oder Mischwasser angeschlossen. Das zufließende Wasser gelangt hierbei vom Zuflußstutzen 10 in einen seitlich neben der Ventilkartusche 11 ausgebildeten Zuflußraum 101 und gelangt von hier über Radialöffnungen 110 in die Ventilkartusche 11. Beim Wasserzapfvorgang tritt das durchströmende Wasser an Auslaßöffnungen 111 der Ventilkartusche 11 heraus und gelangt von hier über einen Abflußkanal 120 zum Auslaufmundstück 12, von dem es als Freistrahl abgegeben wird.
Die Ventilkartusche 11 ist mit Dichtringen und einem Kopfstück 112 gedichtet in das Armaturengehäuse 1 eingeschraubt. Im unteren Bereich der Ventilkartusche 11 ist eine Entlastungskammer 3 ausgebildet, die am oberen Bereich von einem Hauptventilverschlußglied 2 abgeschlossen ist. Koaxial in dem Hauptventilverschlußglied 2 ist ein Entlastungsventil 31 in Form einer Ventilstange ausgebildet, die mit einem Endbereich aus der Ventilkartusche 11 ausgeführt ist und einen Betätigungsgriff 310 trägt. Außerdem ist zwischen dem Betätigungsgriff 310 und dem Kopfstück 112 eine Rückstellfeder 311 angeordnet. Eine weitere Rückstellfeder 312 ist einerseits an einer Schulter des stangenförmigen Entlastungsventils 31 und andererseits an einer Stirnseite des Hauptventilverschlußglieds 2 abgestützt.
Das Hauptventilverschlußglied 2 ist kolbenförmig ausgebildet und trägt in einer Axialbohrung zur Aufnahme des stangenförmigen Entlastungsventils 31 als Axialnuten ausgebildete Entlastungsleitungen 30 sowie am unteren Bereich einen Entlastungsventilsitz 301, der mit einem auf dem stangenförmigen Entlastungsventil 31 angeordneten O-Ring 302 zusammenwirkt. An dem Außenmantel des Hauptventilverschlußglieds 2 ist ein O-Ring 24 angeordnet, der von einer federnden Stützhülse 25 in der Stecklage gesichert ist und mit einem Hauptventilsitz 20 an der Ventilkartusche 11 zusammenwirkt. Außerdem ist an dem der Entlastungskammer 3 zugekehrten Endbereich des Hauptventilverschlußglieds 2 ein Gleitring 26 angeordnet, mit dem ein weiterer O-Ring 27 am Hauptventilverschlußglied 2 gehalten ist, wobei der O-Ring 27 als Kolbenring die Abdichtung zwischen dem Hauptventilverschlußglied 2 und einer Zylinderwandung 113 der Ventilkartusche 11 in Richtung auf die Entlastungskammer 3 bewerkstelligt.
Damit die Entlastungskammer 3 mit dem im Zuflußstutzen 10 befindlichen Wasserdruck kommunizieren kann, ist die Stützhülse 25 mit siebartigen Durchtrittsöffnungen 250 versehen, so daß in einer dahinter befindlichen umlaufenden Ringnut 21 ebenfalls der Wasserzulaufdruck herrscht, der dann von hier über eine Ausgleichsdüse 4 und einem Ausgleichskanal 40 in die Entlastungskammer 3 gelangt. In der Ringnut 21 in einem sehnenartigen Abschnitt vor der Ausgleichsdüse 4 ist außerdem eine Drosseleinrichtung 5 angeordnet, die mit einer kegelförmigen Einsenkung 41 konzentrisch zur Ausgleichsdüse 4 zusammenwirkt und die Durchflußmenge druckabhängig steuert.
Ein zeitlich begrenzter Wasserzapfvorgang erfolgt daher in folgender Weise:
Vom Benutzer wird der Betätigungsgriff 310 mit dem stangenartigen Entlastungsventil 31 entgegen der Kraft der Federn 311, 312 in Richtung auf das Armaturengehäuse 1 bewegt. Hiermit wird der O-Ring 302 vom Entlastungsventilsitz 301 abgehoben, so daß der Wasserdruck in der Entlastungskammer 3 über die Entlastungsleitung 30 an die Auslaßöffnung 111 abgegeben werden kann. Das Hauptventilverschlußglied 2 wird nun durch den anstehenden Wasserdruck vom Hauptventilsitz 20 abgehoben und in die Entlastungskammer 3 axial eingeschoben, so daß ein Wasserausfluß aus dem Auslaufmundstück 12 erfolgt. Wird nun vom Benutzer der Betätigungsgriff 310 losgelassen, so drücken die Federn 311 und 312 das spindelförmige Entlastungsventil 31 wieder in die Schließstellung. Sodann wird das Hauptventil 2 von der Feder 311 und dem anstehenden Druckwasser, das über die Ausgleichsdüse 4 in die Entlastungskammer 3 strömt, wieder in die Schließstellung bewegt, so daß nach einem bestimmten Zeitraum der Wasserausfluß selbsttätig abgesperrt wird.
Insbesondere in der Drossel- und Schließphase des Hauptventilverschlußglieds 2 treten im Bereich der Radialöffnung 110 der Ventilkartusche starke Druckerhöhungen auf, die ein beschleunigtes Schließen in der Drosselphase des Hauptventilverschlußglieds 2 verursachen, was äußerst unerwünscht ist und zu unzulässigen Druckschlägen und auch Geräuschbelästigungen führen kann. Aus diesem Grunde ist die Ausgleichsdüse 4 mit einer besonderen Drosseleinrichtung 5 versehen, mit der die Schließgeschwindigkeit des Hauptventilverschlußglieds 2 in der Drosselphase so verlangsamt wird, daß ein druckstoßarmes Absperren erreicht wird.
Zu diesem Zweck ist die Drosseleinrichtung 5 an einem offenen Ringelement 56 ausgebildet, wie es insbesondere aus Fig. 7 ersichtlich ist. Die Drosseleinrichtung kann aber auch beispielsweise an einem geschlossenen Ringelement ausgebildet sein, welches durch elastische Aufweitung überstreifbar und in die Ringnut einsprengbar ist. Die Ausgleichsdüse 4 ist hierbei als Radialbohrung ausgebildet, die in einer sehnenartig ausgebildeten Außenfläche mündet. Die Ausgleichsdüse 4 hat einen Kreisquerschnitt und weist eine lichte Weite von 0,8 mm auf. Am Außenbereich ist eine kegelförmige Einsenkung 41 ausgebildet, mit einem Kegelwinkel von 164°. Der Außendurchmesser der kegelförmigen Einsenkung 41 entspricht etwa dem 6,25fachen des Durchmessers der Ausgleichsdüse 4. Außerdem ist in der kegelförmigen Einsenkung, wie es insbesondere aus Fig. 10 zu entnehmen ist, zu beiden Seiten der Ausgleichsdüse 4 in der Einsenkung 41 eine Steuerkante 410 ausgebildet, die etwa ein Zehntel des Durchmessers der Ausgleichsdüse 4 erhaben im Kegelmantel vorsteht. Die Steuerkante 410 ist hierbei durch einen axialen Versatz der einen Hälfte zu der zweiten Hälfte des Kegelmantels der Einsenkung 41 erzeugt. Alternativ kann die Steuerkante beispielsweise auch durch eine gewindeartige Steigung der Kegelfläche erzeugt werden, die steigend erhaben vorsteht und nach einer Drehung um 360° sprungartig auf einer Linie vom Außenrand ins Zentrum auf die Anfangsposition zurückspringt und dadurch die Steuerkante erzeugt. Außerdem ist zu beiden Seiten der Einsenkung 41 in der Ringnut 21 symmetrisch zur Ausgleichsdüse 4 jeweils eine Stützkante 22 ausgebildet, die voneinander mit etwa dem 12,5fachen des Durchmessers der Ausgleichsdüse 4 beabstandet sind. Zwischen dem Außenrand der Einsenkung 41 und den Stützkanten 22 ist eine Ausnehmung 23 vorgesehen. Die Stützkanten 22 wie der Außenrand und der Innenrand der Einsenkung 41 sind verrundet ausgebildet. Das offene Ringelement 56 ist aus Flachmaterial gebildet, wie es insbesondere aus Fig. 11 und 12 zu entnehmen ist, dessen Dicke etwa ein Drittel bis einhalb und dessen Breite etwa dem drei- bis vierfachen des Durchmessers der Ausgleichsdüse 4 entspricht. Die Endbereiche sind mit hammerartigen Verdickungen 560,561 versehen, die so ausgebildet sind, daß das Flachband nur in einer Position in der Ringnut 21 befestigbar ist. Konzentrisch zur Ausgleichsdüse 4 ist auf der zur Einsenkung 41 abgewandten Seite des Ringelements 56 ein Verstärkungskegel 57 einstückig an dem Ringelement 56 angeformt. Der Verstärkungskegel 57 weist einen Kegelwinkel von etwa 100° auf, wobei dessen Grundfläche geringfügig kleiner als die Breite des Flachbandes ist. Der Verstärkungskegel 57 ist in der Spitze auf den Durchmesser der Ausgleichsdüse 4 abgestumpft. An der der Einsenkung 41 zugekehrten Seite ist die Oberfläche des Flachbandes poliert ausgebildet.

Wie es insbesondere aus Fig. 7 zu entnehmen ist, ist das als Flachband ausgebildete Ringelement 56 mit den Verdickungen 560,561 an Vorsprüngen 210 in der Ringnut 21 mit einer bestimmten Vorspannung eingespannt. In der Ruheposition ist es mit einem geringen Abstand - etwa 1/4 des Durchmessers der Ausgleichsdüse 4 - zur Einsenkung 41 positioniert. In dieser Stellung können evtl. eingedrungene Schmutzpartikel etc. aus dem Bereich der Ausgleichsdüse 4 ausgeschwemmt werden. Tritt dagegen ein Differenzdruck zwischen der Entlastungskammer 3 und der Radialöffnung 110 der Ventilkartusche 11 auf, so wird das weichfedernde Flachband an den Außenrand der Einsenkung 41 entsprechend angenähert oder gelangt zur Anlage des als Anschlag wirkenden Rands der Einsenkung 41, so daß eine Drosselung des Durchflusses im Normalschließbetrieb mit einem weichen Federbereich erfolgt. Gelangt dagegen das Hauptventilverschlußglied 2 in die Drosselphase, so steigt schlagartig der Druck in der Radialöffnung 10 an, so daß die Drosseleinrichtung 5 mit dem den harten Federbereich bildenden Verstärkungskegel 57 eine weitere Drosselung des Durchflusses durch die Ausgleichsdüse 4 bewirkt. Die Durchflußmenge wird hierbei so weit reduziert, daß ein nahezu druckstoßarmer Abschluß des Wasserzapfventils erfolgt. Das als Flachband ausgebildete Ringelement 56 ist hierbei vorzugsweise einstückig aus Silikonwerkstoff mit einer Shore A 50 Härte hergestellt. Das Hauptventilverschlußglied 2 mit der Ausgleichsdüse 4 kann vorteilhaft aus Polyoximethylen (POM) im Spritzgießverfahren hergestellt werden.
Mit dieser Ausgleichsdüse 4 und der Drosseleinrichtung 5 konnte, wie durch Versuche festgestellt wurde, bei über 200 000 Ventilbetätigungen eine etwa gleichbleibende Funktion festgestellt werden.
Bei einem Differenzdruck von 0,5 bar lieferte die Ausgleichsdüse 4 etwa gleichbleibend 7,0 ml/min Wasser.

Die vorstehend beschriebenen Ausführungsbeispiele beziehen sich auf einen Druckspüler und ein Selbstschlußventil. Selbstverständlich kann der Erfindungsgegenstand auch bei anderen Servoventilen eingesetzt werden, beispielsweise bei Elekromagnetventilen mit einem membranartigen oder kolbenartigen Hauptventilverschlußglied.

## Patentansprüche

1. Servoventil, insbesondere Selbstschlußventil, Druckspüler o. dgl., mit einem relativ zum Hauptventilsitz (20) bewegbaren Hauptventilverschlußglied (2), das mit einem Endbereich in eine Offenund eine Schließstellung zum Hauptventilsitz (20) bringbar ist, einer den anderen Endbereich aufnehmenden Entlastungskammer (3), einem eine Ausgleichsdüse (4) aufweisenden Ausgleichskanal (40) zwischen dem Zuflußstutzen (10) des Ventils und der Entlastungskammer (3) und einer, entgegen einer Federkraft, in eine den Zutrittsquerschnitt der Ausgleichsdüse (4) verringernde Lage bewegbaren Drosseleinrichtung (5), die auf den Differenzdruck zwischen der Entlastungskammer (3) und dem stromaufwärts vor dem Hauptventil befindlichen Bereich anspricht, **dadurch gekennzeichnet, daß** die Drosseleinrichtung (5) gestuft unterschiedlich stark von der Federkraft gegen den Differenzdruck gestützt ist, derart, daß im ersten Drosselbereich bei geringem oder keinem Differenzdruck die Drosseleinrichtung (5) von einem weichen Federbereich in dem größten öffnungsbereich gehalten ist, während bei großem Differenzdruck der weiche Federbereich an einen Anschlag gelangt, und die weitere Drosselung von dem harten Federbereich bestimmt ist.

2. Servoventil nach Anspruch 1, **dadurch gekennzeichnet, daß** die Drosseleinrichtung (5) von einem verschiebbaren Kolben (51) mit einem Drosselglied (510) gebildet ist und der Kolben (51) von einer ersten weichen Feder (52), die einerseits im Grund eines Führungszylinders (53) und andererseits an einer konzentrisch angeordneten, den Zusammendrückbereich bestimmenden Hülse (54) anliegt, und von einer zweiten harten Feder (55), die einerseits an der Hülse (54) und andererseits an einer Stirnseite des Kolbens (51) anliegt, abgestützt ist, derart, daß das Drosselglied (5) ohne Differenzdruck völlig aus der Ausgleichsdüse (4) entfernt ist und bei kleinem Differenzdruck in einem ersten Drosselbereich in die Ausgleichsdüse (4) eingeführt ist, während bei größerem Differenzdruck die Hülse (54) in ihre Anschlaglage gelangt und die weitere Drosselung entgegen der Kraft der harten Feder (55) erfolgt.

3. Servoventil nach Anspruch 1, **dadurch gekennzeichnet, daß** die Drosseleinrichtung (5) tellerfederartig ausgebildet ist, wobei durch Querschnittsänderungen ein erster weicher Federbereich am Rand und ein zweiter zentraler harter Federbereich gebildet ist, und die tellerfederartige Drosseleinrichtung (5) mit einem bestimmten Abstand zu einer kegelförmigen Einsenkung (41) der Ausgleichsdüse (4) angeordnet ist.

4. Servoventil nach Anspruch 3, **dadurch gekennzeichnet, daß** die Drosseleinrichtung (5) aus gummielastischem Werkstoff, insbesondere Silikonwerkstoff, hergestellt ist, wobei der zentrale harte Federbereich als kegelförmige Verdickung (57) ausgebildet ist.

5. Servoventil nach Anspruch 4, **dadurch gekennzeichnet, daß** die Drosseleinrichtung (5) einstückig an einem Ringelement (56) ausgebildet ist, das in einer umlaufenden Ringnut (21), in der auch die Ausgleichsdüse (4) angeordnet ist, im Hauptventilverschlußglied (2) einsprengbar ist.

6. Servoventil nach Anspruch 5, **dadurch gekennzeichnet, daß** das Ringelement (56) mit offenen Enden versehen ist, die in der Stecklage an Vorsprüngen (210) in der Ringnut (21) verrastbar sind.

7. Servoventil nach wenigstens einem der Ansprüche 3 bis 6, **dadurch gekennzeichnet, daß** im Bereich der kegelförmigen Einsenkung (41) wenigstens eine radial vom Außenrand ins Zentrum verlaufende Steuerkante (410) ausgebildet ist, die etwa um ein Zehntel des Durchmessers der Ausgleichsdüse (4) erhaben von dem Kegelmantel vorsteht.

8. Servoventil nach Anspruch 7 in Verbindung mit Anspruch 5, **dadurch gekennzeichnet, daß** parallel zum Ringelement (56) jeweils eine vom Randbereich der kegelförmigen Einsenkung (41) ins Zentrum sich erstreckende Steuerkante (410) vorgesehen ist, die durch einen axialen Versatz der einen Hälfte zu der zweiten Hälfte des Kegelmantels der Einsenkung (41) erzeugt ist.

9. Servoventil nach wenigstens einem der Ansprüche 3 bis 8, **dadurch gekennzeichnet, daß** symmetrisch zu beiden Seiten der Einsenkung (41) Stützkanten (22) vorgesehen sind, die die Drosseleinrichtung (5) mit einem bestimmten Abstand zur Einsenkung (41) positionieren, wobei der Abstand der beiden Stützkanten (22) voneinander etwa dem 12,5fachen des Durchmessers der Ausgleichsdüse (4) entspricht, während der Außendurchmesser der Einsenkung (41) etwa dem 6,25fachen des Durchmessers der Ausgleichsdüse (4) entspricht.

10. Servoventil nach Anspruch 9, **dadurch gekennzeichnet, daß** die Einsenkung (41) einen Kegelwinkel von 160° bis 170°, vorzugsweise 164° aufweist, daß zwischen dem Abstand der Einsenkung (41) und den Stützkanten (22) eine Ausnehmung (23) ausgebildet ist, und daß die Stützkanten (22) sowie der Außenrand und der Innenrand der Einsenkung (41) verrundet ausgebildet sind.

11. Servoventil nach wenigstens einem der Ansprüche 5 bis 10, **dadurch gekennzeichnet, daß** das offene Ringelement (56) als Flachband ausgebildet ist, dessen Dicke etwa 1/3 bis 1/2 und dessen Breite etwa dem 3 bis 4fachen des Durchmessers der Ausgleichsdüse (4) entspricht, wobei wenigstens die im Bereich der Aussenkung (41) angeordnete Oberfläche poliert ist, während auf der gegenüberliegenden Seite konzentrisch zur Ausgleichsdüse (4) ein Verstärkungskegel (57) mit einem Kegelwinkel von etwa 100° ausgebildet ist, dessen Grundfläche geringfügig kleiner als die Breite des Flachbandes ist und als harter Federbereich wirkt.

12. Servoventil nach Anspruch 11, **dadurch gekennzeichnet, daß** an den Endbereichen des Flachbandes hammerartige Verdickungen (560,561) ausgebildet sind, mit denen das Flachband an Vorsprüngen (210) verspannbar ist, wobei die hammerartigen Verdickungen (560,561) so ausgebildet sind, daß das offene Ringelement (56) nur in einer Position montierbar ist.

13. Servoventil nach Anspruch 11 oder 12, **dadurch gekennzeichnet, daß** das offene Ringelement (56) aus einem gummielastischen Werkstoff mit einer Shore A 50 Härte hergestellt ist.

14. Servoventil nach wenigstens einem der Ansprüche 3 bis 13, **dadurch gekennzeichnet, daß** das Hauptventilverschlußglied (2) mit der Ausgleichsdüse (4) aus Kunststoff, insbesondere aus Polyoximethylen (POM), im Spritzgießverfahren hergestellt ist.

## Claims

1. Servo valve, especially a self-closing valve, flushing valve or similar, having a main valve closure member (2) movable relative to the main valve seat (20), one end region of which main valve closure member is capable of being brought into an open position and into a closed position relative to the main valve seat (20),
a relief chamber (3) accommodating the other end region,
a compensating channel (40) having a compensating nozzle (4) and extending between the inlet connector (10) of the valve and the relief chamber (3),
and a throttling device (5) movable against a spring force into a position reducing the admission cross-section of the compensating nozzle (4) and responsive to the differential pressure between the relief chamber (3) and the region located upstream of the main valve, **characterised in that** the throttling device (5) is supported by the spring force against the differential pressure in steps of different strength, such that in the first range of throttling at a low or no differential pressure the throwing device (5) is held in the largest degrees of opening by a soft spring region, while at the largest differential pressure the soft spring region engages a stop and further throttling is determined by the hard spring region.

2. Servo valve according to claim 1, **characterised in that** the throttling device (5) is formed by a displaceable piston (51) with a throttle member (510) and the piston (51) is supported by a first soft spring (52), which bears at one end against the bottom of a guide cylinder (53) and at the other end against a concentrically arranged sleeve (54) determining the range of compression, and by a second hard spring (55), which bears at one end against the sleeve (54) and at the other end against one end face of the piston (51), such that with no differential pressure the throttling member (5) is fully removed from the compensating nozzle (4) and at a small differential pressure is introduced into the compensating nozzle (4) in a first throttling range, whilst at a relatively large differential pressure the sleeve (54) moves into its stop position and further throttling is effected against the force of the hard spring (55).

3. Servo valve according to claim 1, **characterised in that** the throttling device (5) is in the form of a cup spring, a first soft spring region at the edge and a second, central, hard spring region being formed by changes in cross-section, and the cup spring-type throttling device (5) is arranged at a specific distance from a conical recess (41) of the compensating nozzle (4).

4. Servo valve according to claim 3, **characterised in that** the throttling device (5) is manufactured from elastomeric material, especially silicone material, the central hard spring region being in the form of a conical thickening (57).

5. Servo valve according to claim 4, **characterised in that** the throttling device (5) is formed in one piece on an annular element (56) capable of being sprung into a circumferential annular groove (21), in which also the compensating nozzle (4) is arranged, in the main valve closure member (2).

6. Servo valve according to claim 5, **characterised in that** the annular element (56) is provided with open ends, which, in the engaged position, are capable of being locked against projections (210) in the annular groove (21).

7. Servo valve according to at least one of claims 3 to 6, **characterised in that** in the region of the conical recess (41) there is formed at least control edge (410) running radially from the outer edge to the centre, which stands proud of the cone envelope approximately by one tenth of the diameter of the compensating nozzle (4).

8. Servo valve according to claim 7 in combination with claim 5, **characterised in that**, parallel to the annular element (56), a respective control edge (410) is provided extending from the edge region of the conical recess (41) to the centre, which control edge is produced by an axial offset of one half relative to the second half of the cone envelope of the recess (41).

9. Servo valve according to at least one of claims 3 to 8, **characterised in that** symmetrically with respect to both sides of the recess (41), supporting edges (22) are provided, which position the throttling device (51) at a specific distance from the recess (41), the distance of the two supporting edges (22) from one another corresponding approximately to 12.5 times the diameter of the compensating nozzle (4), while the outer diameter of the recess (41) corresponds approximately to 6.25 times the diameter of the compensating nozzle (4).

10. Servo valve according to claim 9, **characterised in that** the recess (41) has a cone angle of 160° to 170°, preferably 164°, **in that** between the recess (41) and the supporting edges (22) an opening (23) is formed, and **in that** the supporting edges (22) and the outer edge and the inner edge of the recess (41) are of rounded construction.

11. Servo valve according to at least one of claims 5 to 10, **characterised in that** the open annular element (56) is in the form of a flat band, the thickness of which corresponds to approximately 1/3 to 1/2 of the diameter of the compensating nozzle (4) and the width of which corresponds to approximately 3 to 4 times the diameter of the compensating nozzle (4), at least the surface arranged in the region of the recess (41) being polished, while on the opposite side, concentric with the compensating nozzle (4), there is formed a reinforcing cone (57) having a cone angle of approximately 100°, the basal area of which is slightly less than the width of the flat band and acts as a hard spring region.

12. Servo valve according to claim 11, **characterised in that** hammer-like thickened regions (560, 561) are formed at the end regions of the flat band, with which the flat band can be clamped to projections (210), the hammer-like thickened regions (560, 561) being constructed so that the open annular element (56) is capable of be installed in only one position.

13. Servo valve according to claim 11 or 12, **characterised in that** the open annular element (56) is manufactured from an elastomeric material having a Shore A hardness of 50.

14. Servo valve according to at least one of claims 3 to 13, **characterised in that** the main valve closure member (2), together with the compensating nozzle (4), is manufactured from plastics material, especially from polyoxymethylene (POM), by an injection moulding process.

## Revendications

1. Servovalve, notamment soupape à fermeture automatique, robinet de chasse d'eau ou similaire, avec un élément de raccord de la soupape principale (2) mobile par rapport au siège de soupape principale (20), lequel élément de raccord peut être amené dans une position d'ouverture et de fermeture par rapport au siège de soupape principal (20), avec une chambre de décharge (3) logeant l'autre zone d'extrémité, avec un canal d'équilibrage (40) présentant un gicleur compensateur (4) entre la tubulure d'admission (10) de la soupape et la chambre de décharge (3) et avec un dispositif d'étranglement (5) se déplaçant à l'encontre d'un effet de ressort dans une position rétrécissant la section transversale d'entrée du gicleur compensateur (4), lequel dispositif d'étranglement (5) réagit à la pression différentielle entre la chambre de décharge (3) et la zone se trouvant en amont devant la soupape principale,
**caractérisée en ce que**
le dispositif d'étranglement (5) soit appuyé par l'effet de ressort contre la pression différentielle à une force étagée de diverses puissances de manière à ce qu'en cas de pression différentielle faible ou minime le dispositif d'étranglement (5) est maintenu dans la première zone d'étranglement par une zone de ressort élastique dans la plus grande zone d'ouverture alors qu'en cas de pression différentielle élevée la zone de ressort élastique s'arrête sur une butée et que l'étranglement continu soit déterminé par la zone de ressort dure.

2. Servovalve selon la revendication 1,
**caractérisée en ce que**
le dispositif d'étranglement (5) est formé par un piston à déplacement (51) avec un organe d'étranglement (510) et le piston (51) est appuyé par un premier ressort élastique (52) qui se trouve d'une part au fond d'un cylindre de guidage (53) et d'autre part contre une douille (54) déterminant la zone de compression disposée de manière concentrique ainsi que par un deuxième ressort dur (55) qui se trouve d'une part contre la douille (54) et d'autre part contre une surface d'attaque du piston (51) de sorte que l'organe d'étranglement (5) est complètement retiré du gicleur compensateur (4) sans pression différentielle et est introduit dans le gicleur compensateur (4) en cas de pression différentielle faible dans une première zone d'étranglement, alors que la douille (54) vient dans sa position de butée lorsque la pression différentielle est élevée et l'autre étranglement se produisant à l'encontre de la force du ressort dur (55).

3. Servovalve selon la revendication 1,
**caractérisée en ce que**
le dispositif d'étranglement (5) est réalisé comme un ressort à disque, dans lequel une première zone de ressort élastique est formée sur le bord ainsi qu'une deuxième zone de ressort dure centrale par des modifications de la section transversale et le dispositif d'étranglement (5) en forme de ressort à disque est placé à une certaine distance par rapport à une cavité (41) conique du gicleur compensateur (4).

4. Servovalve selon la revendication 3,
**caractérisée en ce que**
le dispositif d'étranglement (5) est fabriqué en matériau à gomme élastique, notamment en matériau de silicone, dans lequel la zone de ressort dure centrale est formée en tant que renforcement (57) conique.

5. Servovalve selon la revendication 4,
**caractérisée en ce que**
le dispositif d'étranglement (5) est formé d'un seul tenant sur un élément annulaire (56) enfoncé dans l'élément de raccord (2) de la soupape principale dans une rainure périphérique pour anneau de retenue (21) dans laquelle est également placé le gicleur compensateur (4).

6. Servovalve selon la revendication 5,
**caractérisée en ce que**
l'élément annulaire (56) est pourvu d'extrémités ouvertes qui peuvent être encliquetées en position d'encastrement sur des saillies (210) dans la rainure pour anneau de retenue (21).

7. Servovalve selon au moins l'une quelconque des revendications 3 à 6,
**caractérisée en ce qu'**
au moins une rampe (410) allant radialement du bord extérieur au centre est formée dans la zone de la cavité (41) conique, laquelle rampe fait saillie de manière profilée sur l'aire latérale du cône d'environ un dixième du diamètre du gicleur compensateur (4).

8. Servovalve selon la revendication 7 associée à la revendication 5,
**caractérisée en ce qu'**
une rampe (410) allant du bord de la cavité (41) conique au centre est prévue parallèlement à l'élément annulaire (56), laquelle rampe (410) est générée par un chevauchement axial d'une moitié sur l'autre moitié de l'aire latérale de cône de la cavité (41).

9. Servovalve selon au moins l'une quelconque des revendications 3 à 8,
**caractérisée en ce que**
des rampes (22) sont prévues symétriquement par rapport aux deux côtés de la cavité (41), lesquelles rampes positionnent le dispositif d'étranglement (5) à une certaine distance de la cavité (41), dans laquelle l'espacement des deux rampes (22) l'une par rapport à l'autre correspond environ à 12,5 fois le diamètre du gicleur compensateur (4) alors que le diamètre extérieur de la cavité (41) correspond environ à 6,25 fois le diamètre du gicleur compensateur (4).

10. Servovalve selon la revendication 9,
**caractérisée en ce que**
la cavité (41) comporte un angle de cône de 160° à 170°, de préférence 164°, et un évidement (23) est formé entre l'espacement de la cavité (41) et les rampes (22) et que les rampes (22) ainsi que le bord extérieur et le bord intérieur de la cavité (41) sont arrondis.

11. Servovalve selon au moins l'une quelconque des revendications 5 à 10,
**caractérisée en ce que**
l'élément annulaire ouvert (56) est formé en tant que ruban dont l'épaisseur est comprise entre 1 /3 et 1/2 et la largeur entre 3 à 4 fois le diamètre du gicleur compensateur (4), la surface placée dans la zone de la cavité (41) étant polie alors qu'un cône de renforcement (57) est formé de manière concentrique par rapport au gicleur compensateur (4) sur le côté opposé avec un angle de cône d'environ 100° dont l'aire est légèrement plus petite que la largeur du ruban et qui sert de zone de ressort plus dure.

12. Servovalve selon la revendication 11,
**caractérisée en ce que**
des épaississements (560, 561) de type marteau sont formés sur les zones d'extrémité du ruban, le ruban pouvant être tendu par ces épaississements sur des saillies (210), dans laquelle les épaississements (560, 561) de type marteau sont réalisés de manière à ce que l'élément annulaire ouvert (56) ne puisse être monté que dans une seule position

13. Servovalve selon la revendication 11 ou 12,
**caractérisée en ce que**
l'élément annulaire ouvert (56) est fabriqué à partir d'un matériau à gomme élastique avec une dureté Shore A 50.

14. Servovalve selon au moins l'une quelconque des revendications 3 à 13,
**caractérisée en ce que**
l'élément de raccord de la soupape principale (2) est fabriqué par injection en matière thermodurcissable avec le gicleur compensateur (4) en matière plastique et notamment en polyoxyméthylène (POM).
